# EUROPEAN PATENT APPLICATION

(11) **EP 4 815 592 A1**
(43) Date of publication of application: **30.09.2026**
(21) Application number: 23959145.6
(22) Date of filing: 22.11.2023
(51) Int. Cl.: H04W 72/0446

(54) **WIRELESS COMMUNICATION METHOD AND COMMUNICATION DEVICE**

(71) Applicant: GUANGDONG OPPO MOBILE TELECOMMUNICATIONS CORP., LTD., Dongguan, Guangdong 523860 (CN)
(72) Inventor: ZHANG, Shichang, Dongguan, Guangdong 523860 (CN)
(74) Representative: RGTH
(86) International application number: PCT/CN2023/133246
(87) International publication number: WO 2025/107171

(57) **Abstract**

Provided are a wireless communication method and a communication device. The method comprises: when a first channel satisfies a first condition, a communication device sends the first channel in an SCSt mode, wherein the first condition is related to one or more of the following pieces of information: the type of the first channel; the priority corresponding to the first channel; an initial value of a channel access counter corresponding to a first channel; and information borne by the first channel. Even if the communication device has no available COT, the communication device may send the first channel in the SCSt mode if the first condition is satisfied. In the SCSt mode, the number of transmissions is relatively low and the transmission time is relatively short, so that sending the first channel in the SCSt mode can reduce the energy consumption of performing a type 1 channel access process of sending the first channel.

## Description

### TECHNICAL FIELD

This application relates to the field of communications technologies, and more specifically, to a wireless communication method and a communications device.

### BACKGROUND

For a device that needs to communicate in unlicensed spectrum, in the absence of available channel occupancy time (channel occupancy time, COT), the communications device needs to perform type 1 channel access. However, a type 1 channel access procedure requires that the communications device monitor a channel for relatively long time. During channel monitoring, the communications device cannot enter a sleep state, and consequently, power consumption of the communications device is relatively large.

### SUMMARY

This application provides a wireless communication method and a communications device. Various aspects of this application are described below.

According to a first aspect, a wireless communication method is provided, where the method includes: when a first channel meets a first condition, transmitting, by a communications device, the first channel in a short control signalling transmission (short control signaling transmission, SCSt) mode. The first condition is related to one or more of the following information: a type of the first channel; a priority corresponding to the first channel; an initial value of a channel access counter corresponding to the first channel, or information carried in the first channel.

According to a second aspect, a wireless communication method is provided, where the method includes: executing, by a communications device, a channel access procedure, where a parameter for the channel access procedure is related to a capability of the communications device.

According to a third aspect, a communications device is provided, where the device includes a transmitting unit, configured to transmit a first channel in an SCSt mode when the first channel meets a first condition. The first condition is related to one or more of the following information: a type of the first channel; a priority corresponding to the first channel; an initial value of a channel access counter corresponding to the first channel, or information carried in the first channel.

According to a fourth aspect, a communications device is provided, where the device includes an execution unit, configured to execute a channel access procedure. A parameter for the channel access procedure is related to a capability of the communications device.

According to a fifth aspect, a communications device is provided. The communications device includes a processor, a memory, and a transceiver. The memory is configured to store one or more computer programs, and the processor is configured to invoke the computer program in the memory to cause the communications device to perform some or all of the steps in the method according to the first aspect and/or the second aspect.

According to a sixth aspect, an embodiment of this application provides a communications system, and the communications system includes the foregoing communications device. In another possible design, the system may further include another device that interacts with the terminal device or the network device in the solution provided in embodiments of this application.

According to a seventh aspect, an embodiment of this application provides a computer-readable storage medium. The computer-readable storage medium stores a computer program, and the computer program causes a communications device to perform some or all of the steps in the method according to the foregoing aspects.

According to an eighth aspect, an embodiment of this application provides a computer program product. The computer program product includes a non-transitory computer-readable storage medium storing a computer program, and the computer program is operable to cause a communications device to perform some or all of the steps of the method according to the foregoing aspects. In some implementations, the computer program product may be a software installation package.

According to a ninth aspect, an embodiment of this application provides a chip, where the chip includes a memory and a processor, and the processor may invoke a computer program from the memory and run the computer program, to implement some or all of steps described in the method according to the foregoing aspects.

Even if a communications device has no available COT, in a case that a first condition is met, the communications device may transmit a first channel in an SCSt mode. In the SCSt mode, there are few quantities of transmissions and transmission time is relatively short. Therefore, transmitting the first channel in the SCSt mode may reduce energy consumption of transmitting the first channel in a type 1 channel access procedure.

### BRIEF DESCRIPTION OF DRAWINGS

FIG. 1 is a schematic diagram of a wireless communications system to which embodiments of this application are applicable.
FIG. 2 is an example diagram of a slot structure for a sidelink communications system.
FIG. 3 is an example diagram of a sidelink slot structure configured with a physical sidelink feedback channel (physical sidelink feedback channel, PSFCH) resource.
FIG. 4 is an example diagram of a sidelink slot structure in which no PSFCH resource is configured.
FIG. 5 is an example diagram of a single-symbol demodulation reference symbol (demodulation reference symbol, DMRS) frequency domain type 1.
FIG. 6 is an example diagram of a resource pool for a physical sidelink control channel (physical sidelink control channel, PSCCH) and a physical sidelink shared channel (physical sidelink shared channel, PSSCH).
FIG. 7 is a schematic diagram of an interlaced resource block (interlaced resource block, IRB).
FIG. 8 is a schematic diagram of a frame structure.
FIG. 9 is a schematic diagram of a resource block (resource block, RB) set (set) with a 60 MHz carrier bandwidth.
FIG. 10 is a schematic flowchart of a wireless communication method according to an embodiment of this application.
FIG. 11 is a schematic flowchart of another wireless communication method according to an embodiment of this application.
FIG. 12 is a schematic structural diagram of a communications device according to an embodiment of this application.
FIG. 13 is a schematic structural diagram of another communications device according to an embodiment of this application.
FIG. 14 is a schematic structural diagram of an apparatus used for communication according to an embodiment of this application.

### DESCRIPTION OF EMBODIMENTS

Technical solutions in this application are described below with reference to the accompanying drawings.

### Communications system

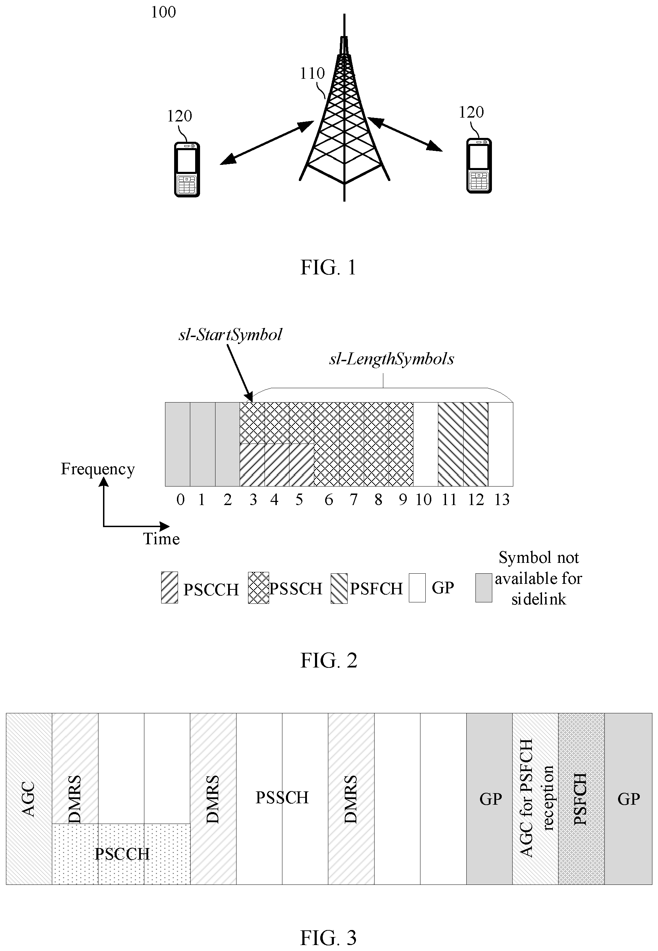

FIG. 1 is an example diagram of a system architecture of a wireless communications system 100 to which embodiments of this application are applicable. The wireless communications system 100 may include a network device 110 and a terminal device 120. The network device 110 may be a device that communicates with the terminal device 120. The network device 110 may provide communication coverage for a specific geographical area, and may communicate with the terminal device 120 located within the coverage.

Optionally, the wireless communications system 100 may include a plurality of network devices, and another quantity of terminal devices may be included within coverage of each network device, which is not limited in embodiments of this application.

Optionally, the wireless communications system 100 may further include other network entities such as a network controller and a mobility management entity, which are not limited in embodiments of this application.

It should be understood that the technical solutions in embodiments of this application may be applied to various communications systems, for example, a fifth generation (5th generation, 5G) system or a new radio (new radio, NR), a long term evolution (long term evolution, LTE) system, an LTE frequency division duplex (frequency division duplex, FDD) system, and an LTE time division duplex (time division duplex, TDD). The technical solutions provided in this application may further be applied to a future communications system, such as a 6th generation mobile communications system or a satellite communications system.

The terminal device in embodiments of this application may also be referred to as user equipment (user equipment, UE), an access terminal, a user unit, a user station, a mobile site, a mobile station (mobile station, MS), a mobile terminal (mobile terminal, MT), a remote station, a remote terminal, a mobile device, a user terminal, a terminal, a wireless communications device, a user agent, or a user apparatus. The terminal device in embodiments of this application may be a device providing a user with voice and/or data connectivity and capable of connecting people, objects, and machines, such as a handheld device or vehicle-mounted device having a wireless connection function. The terminal device in embodiments of this application may be a mobile phone (mobile phone), a tablet computer (Pad), a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in smart grid (smart grid), a wireless terminal in transportation safety (transportation safety), a wireless terminal in smart city (smart city), a wireless terminal in smart home (smart home), or the like. Optionally, the terminal device may be configured to act as a base station. For example, the terminal device may act as a scheduling entity that provides a sidelink signal between terminal devices in vehicle-to-everything (vehicle-to-everything, V2X) communication, device-to-device (device-to-device, D2D) communication, or the like. For example, a cellular phone and a vehicle communicate with each other through a sidelink signal. A cellular phone and a smart home device communicate with each other, without relaying a communication signal through a base station. Optionally, the terminal device may be configured to act as a base station.

The network device in embodiments of this application may be a device for communicating with the terminal device. The network device may also be referred to as an access network device or a wireless access network device. For example, the network device may be a base station. The network device in embodiments of this application may be a radio access network (radio access network, RAN) node (or device) that connects the terminal device to a wireless network. The base station may broadly cover devices having the following various names, or may be interchanged with the devices having the following names, such as a NodeB (NodeB), an evolved NodeB (evolved NodeB, eNB), a next generation NodeB (next generation NodeB, gNB), a relay station, an access point, a transmitting and receiving point (transmitting and receiving point, TRP), a transmitting point (transmitting point, TP), a primary MeNB, a secondary SeNB, a multistandard radio (MSR) node, a home base station, a network controller, an access node, a wireless node, an access point (access point, AP), a transmission node, a transceiver node, a baseband unit (base band unit, BBU), a remote radio unit (Remote Radio Unit, RRU), an active antenna unit (active antenna unit, AAU), a remote radio head (remote radio head, RRH), a central unit (central unit, CU), a distributed unit (distributed unit, DU), a positioning node, or the like. The base station may be a macro base station, a micro base station, a relay node, a donor node, or the like, or a combination thereof. Alternatively, the base station may be a communications module, a modem, or a chip disposed in the device or apparatus described above. Alternatively, the base station may be a mobile switching center, a device that functions as a base station in device-to-device (device-to-device, D2D), vehicle-to-vehicle (vehicle-to-vehicle, V2V), vehicle-to-everything (vehicle-to-everything, V2X), and machine-to-machine (machine-to-machine, M2M) communications, a network-side device in a 6G network, a device that functions as a base station in a future communications system, or the like. The base station may support networks of a same access technology or different access technologies. A specific technology and a specific device used by the network device are not limited in embodiments of this application.

The base station may be a stationary or mobile base station. For example, a helicopter or an unmanned aerial vehicle may be configured to act as a mobile base station, and one or more cells may move based on a position of the mobile base station. In another example, a helicopter or an unmanned aerial vehicle may be configured to serve as a device in communication with another base station.

In some deployments, the network device in embodiments of this application may be a CU or a DU, or the network device may include a CU and a DU. The gNB may further include an AAU.

The network device and the terminal device may be deployed on land, including being indoors or outdoors, handheld, or vehicle-mounted, may be deployed on a water surface, or may be deployed on a plane, a balloon, or a satellite in the air. A scenario in which the network device and the terminal device are located is not limited in embodiments of this application.

It should be understood that all or some of functions of the communications device in this application may alternatively be implemented by software functions running on hardware, or by virtualization functions instantiated on a platform (for example, a cloud platform).

### Sidelink communication

Sidelink communication (or sidelink transmission) refers to a communications technology based on a sidelink (sidelink, SL). Sidelink communication may be, for example, D2D or V2X. Sidelink communication supports direct transmission of communication data between terminal devices. Direct transmission of the communication data between terminal devices may have higher spectral efficiency and a lower transmission delay. For example, a vehicle-to-everything system uses a sidelink communication technology.

Sidelink communication may be classified, depending on a network coverage status of the terminal device, into sidelink communication within network coverage, sidelink communication with partial network coverage, sidelink communication outside network coverage, and sidelink communication based on a central control node.

### Slot structure in a sidelink communications system

The following uses an NR-V2X system as an example to describe a slot structure in a sidelink communications system.

In NR-V2X, a PSSCH and its associated PSCCH may be transmitted in a same slot. The PSCCH may occupy two or three time domain symbols. Time domain resource allocation in NR-V2X may be performed based on a slot granularity. Generally, a starting point and a length of time domain symbols used for sidelink transmission in one slot are configured by using parameters *sl-startSLsymbols* and *sl-lengthSLsymbols*. The last symbol in the time domain symbols used for sidelink transmission may be used as a guard period (guard period, GP), and only remaining time domain symbols can be used by the PSSCH and PSCCH. However, if a PSFCH transmission resource is configured in one slot, the PSSCH and the PSCCH cannot occupy a time domain symbol used for PSFCH transmission, or automatic gain control (automatic gain control, AGC) and GP symbols located before the symbol.

As shown in FIG. 2, a network configuration is *sl-StartSymbol* = 3, *sl-LengthSymbols* = 11. The configuration indicates that 11 time domain symbols that start from the symbol index 3 in a slot may be used for sidelink transmission; there is a transmission resource for a PSFCH in the slot; the PSFCH occupies a symbol 11 and a symbol 12; the symbol 11 is used as an AGC symbol for the PSFCH; symbols 10 and 13 are both used as a GP; time domain symbols that may be used for PSSCH transmission are symbols 3 to 9; a PSCCH occupies three time domain symbols, that is, symbols 3, 4, and 5; and the symbol 3 is usually used as an AGC symbol.

In NR-V2X, in addition to the PSCCH and PSSCH, a PSFCH may also exist in a sidelink slot. As shown in FIG. 3, in a slot, the first orthogonal frequency division multiplexing (orthogonal frequency division multiplexing, OFDM) symbol is fixed for automatic gain control AGC. On an AGC symbol, a UE copies information transmitted on the second symbol. At the end of the slot, one symbol is reserved for transmitting-receiving conversion, so that the UE switches from a transmit (or receive) state to a receive (or transmit) state. In remaining OFDM symbols, a PSCCH may occupy two or three OFDM symbols starting from the second sidelink symbol. In frequency domain, a quantity of physical resource blocks (physical resource block, PRB) occupied by the PSCCH falls within a subband range of one PSSCH. If a quantity of PRBs occupied by the PSCCH is less than that of one sub-channel of the PSSCH, or a frequency domain resource of the PSSCH includes a plurality of sub-channels, on the OFDM symbols on which the PSCCH is located, the PSCCH may be frequency-division-multiplexed with the PSSCH.

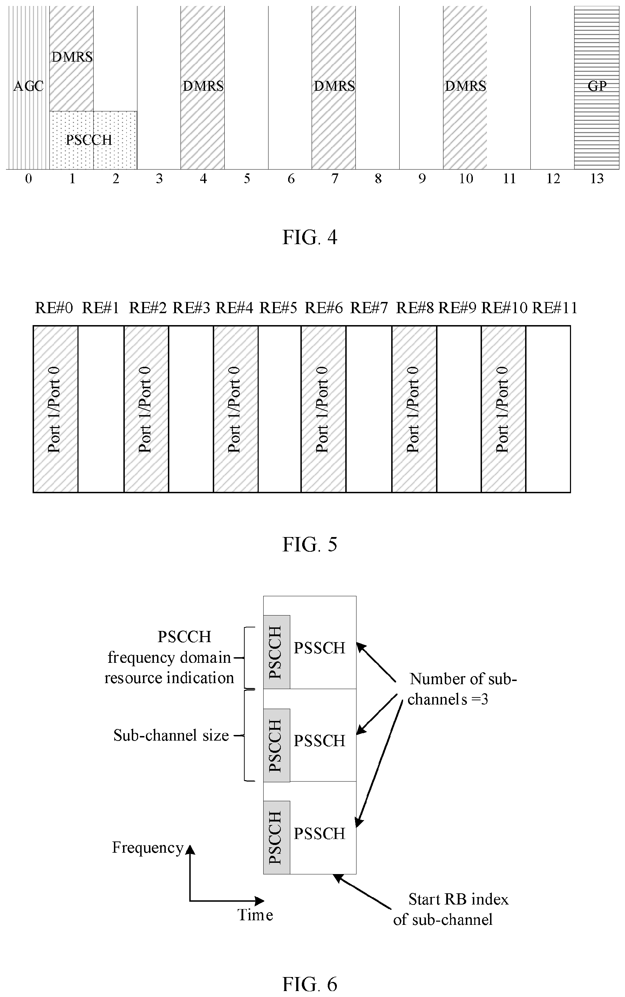

Referring to design in an NR Uu interface, a DMRS of the PSSCH in NR-V2X uses a plurality of time domain PSSCH DMRS patterns. In one resource pool, a quantity of available DMRS patterns is related to a quantity of PSSCH symbols in the resource pool. For specific quantities of PSSCH symbols (including the 1^{st} AGC symbol) and PSCCH symbols, an available DMRS pattern and a location of each DMRS symbol in the pattern are shown in Table 1. FIG. 4 is a schematic diagram of time domain locations of four DMRS symbols in a case of 13 PSSCH symbols.

**Table 1**

| Quantity of PSSCH symbols (including the 1^{st} AGC symbol) | Location of a DMRS symbol (relative to a location of the 1^{st} AGC symbol) | | | | | |
|---|---|---|---|---|---|---|
| | Quantity of PSCCH symbols being 2 | | | Quantity of PSCCH symbols being 3 | | |
| | Quantity of DMRS symbols | | | Quantity of DMRS symbols | | |
| | 2 | 3 | 4 | 2 | 3 | 4 |
| 6 | 1, 5 | | | 1, 5 | | |
| 7 | 1, 5 | | | 1, 5 | | |
| 8 | 1, 5 | | | 1, 5 | | |
| 9 | 3, 8 | 1, 4, 7 | | 4, 8 | 1, 4, 7 | |
| 10 | 3, 8 | 1, 4, 7 | | 4, 8 | 1, 4, 7 | |
| 11 | 3, 10 | 1, 5, 9 | 1, 4, 7, 10 | 4, 10 | 1, 5, 9 | 1, 4, 7, 10 |
| 12 | 3, 10 | 1, 5, 9 | 1, 4, 7, 10 | 4, 10 | 1, 5, 9 | 1, 4, 7, 10 |
| 3 | 3, 10 | 1, 6, 11 | 1, 4, 7, 10 | 4, 10 | 1, 6, 11 | 1, 4, 7, 10 |

If a plurality of time-domain DMRS patterns are configured in a resource pool, a time-domain DMRS pattern to be specifically used is selected by a transmitting terminal device and indicated in first-stage SCI. In this design, a high-speed moving terminal device is allowed to select a high-density DMRS pattern, thereby ensuring accuracy of channel estimation; and a low-speed moving terminal device may use a low-density DMRS pattern, thereby improving spectral efficiency.

A generation manner of a PSSCH DMRS sequence is almost the same as a generation manner of a PSCCH DMRS sequence. The only difference lies in an initialization formula cᵢₙᵢₜ of a pseudo-random sequence c(m), where ${N}_{ID} = {\sum }_{i = 0}^{L - 1} {p}_{i} ⋅ {2}^{L - 1 - i}$, where *pᵢ* may be the i^{th}-bit CRC of the PSCCH that schedules the PSSCH, and *L* may be a quantity of CRC bits of the PSCCH, for example, *L* = 24.

In an NR communications system, a PDSCH and a PUSCH support two frequency domain DMRS patterns: a DMRS frequency domain type 1 and a DMRS frequency domain type 2. For each frequency domain type, there may be two different types: a single-symbol DMRS type and a double-symbol DMRS type. A single-symbol DMRS frequency domain type 1 supports four DMRS ports, and a single-symbol DMRS frequency domain type 2 may support six DMRS ports. In a case of the double-symbol DMRS frequency domain type, a quantity of supported ports is doubled. However, in some sidelink communications systems (for example, NR-V2X), because a PSSCH may only need to support a maximum of two DMRS ports, only the single-symbol DMRS frequency domain type 1 may be supported. FIG. 5 is an example diagram of a single-symbol DMRS frequency domain type 1.

### Determining of frequency domain resources in a sidelink communications system

The following uses an NR-V2X system as an example to describe determining of frequency domain resources in a sidelink communications system.

Similar to that in LTE-V2X, frequency domain resources in an NR-V2X resource pool may be consecutive, and the frequency domain resources are assigned at a sub-channel granularity. A quantity of PRBs included in one sub-channel may be {10, 12, 15, 20, 50, 75, 100}. The smallest sub-channel size may be 10 PRBs, which is far greater than the smallest sub-channel size 4 PRBs in LTE-V2X. This is mainly because a frequency domain resource of a PSCCH in NR-V2X is located in the 1^{st} sub-channel of a PSSCH associated with the PSCCH, the frequency domain resource of the PSCCH is less than or equal to a size of one sub-channel of the PSSCH, and a time domain resource of the PSCCH occupies two or three OFDM symbols. If a sub-channel size is configured to be relatively small, available resources of the PSCCH are few, a code rate is increased, and performance for detecting the PSCCH is reduced. In NR-V2X, a sub-channel size of a PSSCH and a size of a frequency domain resource of a PSCCH are independently configured. However, it should be ensured that the size of the frequency domain resource of the PSCCH is less than or equal to the sub-channel size of the PSSCH. The following describes configuration parameters in NR-V2X resource pool configuration information. The configuration parameters may be used to determine frequency domain resources of a resource pool for the PSCCH and PSSCH.

Sub-channel size (sl-SubchannelSize) may indicate a quantity of consecutive PRBs included in one sub-channel in a resource pool. A value range of this parameter may be {10, 12, 15, 20, 50, 75, 100} PRBs.

Number of sub-channels (sl-NumSubchannel) may indicate a quantity of sub-channels included in the resource pool.

Start RB index of sub-channel (sl-StartRB-Subchannel) may indicate a start PRB index of the first sub-channel in the resource pool.

Number of PRBs (sl-RB-Number) may indicate a quantity of consecutive PRBs included in the resource pool.

PSCCH frequency domain resource indication (sl-FreqResourcePSCCH) may indicate a frequency domain resource size of the PSCCH, and a value range is {10, 12, 15, 20, 25} PRBs.

When a UE determines a resource pool used for PSSCH transmission or PSSCH reception, a frequency domain resource included in the resource pool is sl-NumSubchannel consecutive sub-channels starting from a PRB indicated by sl-StartRB-Subchannel. If a final quantity of PRBs included in the sl-NumSubchannel consecutive sub-channels is less than a PRB quantity indicated by sl-RB-Number, remaining PRBs cannot be used for PSSCH transmission or reception.

In NR-V2X, a frequency domain start location of the 1^{st} sub-channel of a PSSCH is aligned with that of a PSCCH associated with the PSSCH. Therefore, a start location of each PSSCH sub-channel is a possible frequency domain start location of the PSCCH.

Based on the foregoing parameters, a frequency domain range of the resource pool for the PSCCH and the PSSCH may be determined. FIG. 6 is example diagram of a resource pool for the PSCCH and PSSCH in NR-V2X.

In NR-V2X, a PSCCH may be used to carry sidelink control information related to resource sensing. For example, the sidelink control information may include one or more of the following: a priority of scheduled transmission; frequency domain resource allocation for indicating a quantity of frequency domain resources of a PSSCH scheduled in a current slot by using a PSCCH, and a quantity of frequency domain resources of a maximum of two reserved retransmission resources and start locations thereof; time domain resource allocation for indicating time domain locations of a maximum of two retransmission resources; a reference signal pattern of a PSSCH; a second-stage SCI format; a second-stage SCI code rate offset; a quantity of PSSCH DMRS ports; a modulation and coding scheme MCS; an MCS table indication, a PSFCH symbol quantity, a resource reservation period for reserving a resource used for transmitting another TB in a next period, where if resource reservation between TBs is not activated in the resource pool configuration, an information bit field does not exist; or a reserved bit. The reserved bits may be 2 to 4 bits, and a specific quantity of bits is configured or pre-configured by a network.

A PSCCH and a scheduled PSSCH are always transmitted in one slot, and a start location of a PRB occupied by the PSCCH is a start location of the 1^{st} sub-channel of the scheduled PSSCH, and thus a start location of the scheduled PSSCH in time-frequency domain is not explicitly indicated in a sidelink control information (sidelink control information, SCI) format 1-A.

### Sidelink transmission on unlicensed spectrum

Unlicensed spectrum is a spectrum that is classified by a country and a region and that can be used for communication of a radio device. The spectrum is generally considered as a shared spectrum. That is, a communications device can use the spectrum provided that a regulatory requirement set for the spectrum by a country or a region is met, without applying for a dedicated spectrum grant from a dedicated spectrum management authority of the country or the region. The unlicensed spectrum may also be referred to as shared spectrum, license-free spectrum, an unlicensed frequency band, a license-free frequency band, or the like.

For sidelink over unlicensed spectrum (sidelink over unlicensed spectrum, SL-U), the sidelink transmission is required to meet specific regulatory requirements. The regulatory requirements may include a minimum occupied channel bandwidth (occupied channel bandwidth, OCB) requirement and/or a maximum power spectral density (power spectral density, PSD) requirement.

The OCB requirement requires that an occupied channel bandwidth should be not less than 80% of a channel bandwidth when a UE performs data transmission. The maximum power spectral density requirement may require that a transmit power of the UE on every 1 MHz cannot exceed 10 dBm. To meet the OCB and PSD regulatory requirements, an IRB structure may be used for sidelink transmission on the unlicensed spectrum. One IRB includes N RBs that are discrete in frequency domain, a total of M IRBs are included in a frequency band range, and RBs included in the m^{th} IRB are {m, M+m, 2M+m, 3M+m, ...}.

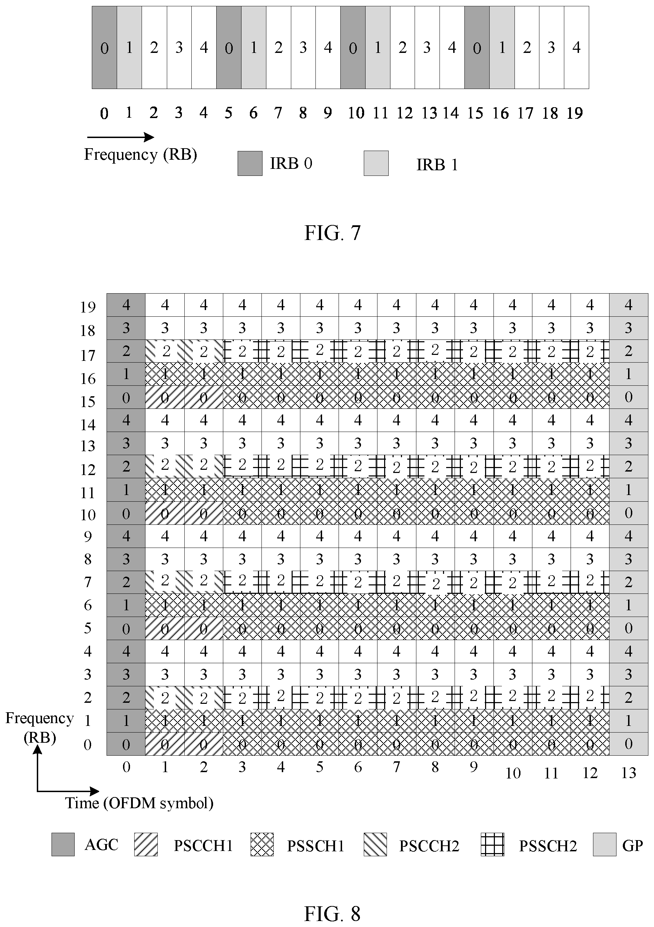

FIG. 7 is a schematic diagram of an IPB. As shown in FIG. 7, a system bandwidth includes 20 RBs, including 5 IRBs (that is, M = 5), each IRB includes 4 RBs (that is, N = 4), and any two adjacent RBs belonging to a same IRB are spaced by a same frequency domain spacing, that is, 5 RBs. The numbers in boxes in FIG. 7 represent IRB indexes.

In an SL-U system, if an IRB-based resource allocation granularity is used, channels such as a PSCCH and a PSSCH in the SL-U system should be based on an IRB structure. FIG. 8 is a schematic diagram of a frame structure that includes only a PSCCH and a PSSCH within a slot and includes no PSFCH. As shown in FIG. 8, a bandwidth includes 20 RBs, with 5 IRB resources being configured, that is, M = 5, each IRB resource includes 4 RBs, and the numbers in boxes represent IRB indexes. In FIG. 8, according to system configuration, the PSCCH occupies one IRB resource and two OFDM symbols in time domain. The PSSCH uses an IRB as a granularity, the first symbol in the slot is an AGC symbol, and the last symbol is a GP symbol. As shown in FIG. 8, PSSCH 1 occupies IRB #0 and IRB #1, and a PSCCH 1 corresponding to the PSSCH 1 occupies IRB #0. A PSSCH 2 occupies IRBs #2, and a corresponding PSCCH 2 also occupies IRBs #2. It should be noted that, for simplicity, a resource occupied by second-stage SCI and resources occupied by a PSCCH DMRS and a PSSCH DMRS are not shown in FIG. 8.

On unlicensed spectrum, a UE accesses a channel through LBT. In frequency domain, the LBT generally uses 20 MHz as a granularity, and every 20 MHz may be referred to as one RB set (RB set). One carrier may include a plurality of RB sets, with a guard period between RB sets, as shown in FIG. 8.

### LBT

On unlicensed spectrum, a communications device may use the unlicensed spectrum by following a rule of "listen-before-talk (listen-before-talk, LBT)".

An LBT principle may include that: a communications device is required to perform LBT first before transmitting a signal on a channel over the unlicensed spectrum. If the LBT succeeds, a channel listening result is that the channel is idle. Only when a channel is idle, the communications device can transmit a signal by using the channel. If the channel monitoring result of the communications device on the channel is that the channel is busy or the LBT fails, the communications device cannot transmit a signal by using the channel. In addition, to ensure fairness in using a spectrum resource of shared spectrum, if the communications device performs LBT successfully in unlicensed spectrum, duration in which the communications device may perform communication transmission by using the channel cannot exceed specific duration. In this mechanism, maximum duration available for communication after one time of successful LBT is restricted, so that different communications devices may have an opportunity to access the shared channel, and thus different communications systems coexist friendly in the shared spectrum.

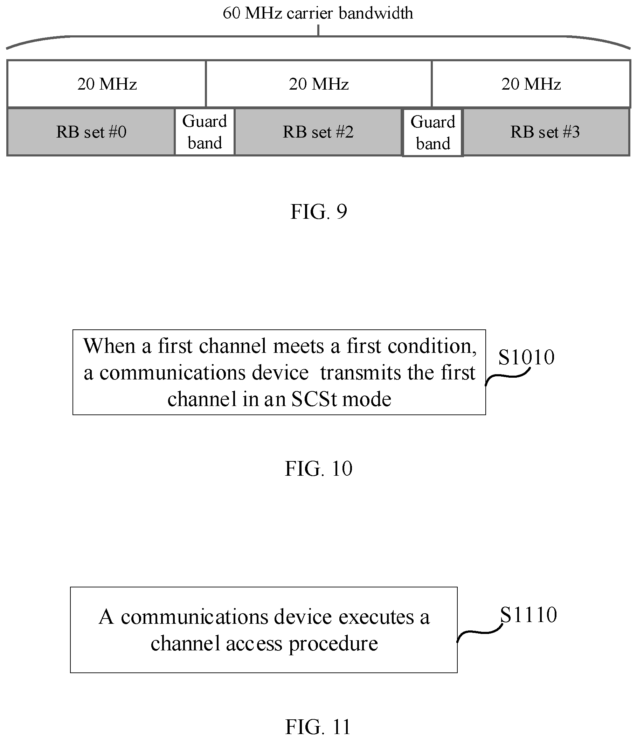

LBT may use 20 MHz as a granularity in frequency domain. Every 20 MHz may be referred to as one RB set (RB Set). One carrier may include a plurality of RB sets. There may be a guard period between RB sets. FIG. 9 is a schematic diagram of an RB set of 60 MHz carrier bandwidth.

### Channel access on the unlicensed spectrum

A communications device may access a channel by using LBT of type 1 (type1) or type 2 (type2). When the communications device has no available channel occupancy time (channel occupancy time, COT), channel access may be implemented by using the type 1. When the communications device has available COT, channel access may be implemented by using the type 2.

The following uses a network device as an example to describe in detail the type 1 channel access mode and the type 2 channel access mode. It may be understood that, a process in which a terminal device or another communications device performs channel monitoring by using the type 1 channel access mode or the type 2 channel access mode is similar to the following process.

### Type 1 channel access

The type 1 channel access mode may also be referred to as multi-slot channel detection with random backoff based on contention window size adjustment. In the type 1 channel access mode, a corresponding channel access priority class (channel access priority class, CAPC) *p* may be selected based on a priority of a service to be transmitted. A communications device may initiate channel occupation of duration T_{mcot} based on a channel access priority class p.

A default channel access mode on a network device side is the type 1 channel access mode. Table 2 shows channel access priority classes and corresponding parameters used when a network device performs the type 1 channel access mode. In Table 2, mₚ may denote a quantity of backoff slots corresponding to a channel access priority class *p*, CWₚ may denote a size of a contention window (contention window, CW) corresponding to a channel access priority class *p*, CW_{min, p} may denote a minimum value of a value of CWₚ corresponding to a channel access priority class *p*, CW_{max, p} may denote a maximum value of a value of CWₚ corresponding to a channel access priority class *p*, or T_{mcot, p} may denote a maximum channel occupancy time length corresponding to a channel access priority class *p*.

**Table 2**

| Channel access priority class (*p*) | mₚ | CW_{min,p} | CW_{max,p} | T_{mcot,p} | Allowed CWₚ value |
|---|---|---|---|---|---|
| 1 | 1 | 3 | 7 | 2 ms | {3, 7} |
| 2 | 1 | 7 | 15 | 3 ms | {7, 15} |
| 3 | 3 | 15 | 63 | 8 or 10 ms | {15, 31, 63} |
| 4 | 7 | 15 | 1023 | 8 or 10 ms | {15, 31, 63, 127, 255, 511, 1023} |

The network device may select a corresponding channel access priority class *p* according to a priority of a service to be transmitted, and acquire COT on the unlicensed spectrum carrier in the type 1 channel access mode based on the channel access parameter corresponding to the channel access priority class *p* in Table 2. In the acquired COT, the network device may perform continuous transmission or discontinuous transmission.

The network device initiating COT by using the LBT of type 1 may specifically include step 1 to step 5.

Step 1: The network device sets a counter N = Nᵢₙᵢₜ, where Nᵢₙᵢₜ is a random number evenly distributed between 0 and CW*ₚ*. Next, step 4 is performed.

Step 2: If N > 0, the network device subtracts 1 from the counter, that is, N = N - 1.

Step 3: The network device performs monitoring slot detection with a length of Tₛₗ (Tₛₗ denotes an LBT monitoring slot, and the length is 9 µs) on a channel. If the monitoring slot is idle, step 4 is performed. Otherwise, step 5 is performed.

Step 4: If N = 0, the network device ends the channel access procedure. Otherwise, step 2 is performed.

Step 5: The network device performs monitoring slot detection on the channel with a time length of T_{d} (T_{d} = 16 + mₚ*9 [µs]). Results of the monitoring slot detection may be divided into two cases: One case is that at least one monitoring slot is occupied; and another case is that all monitoring slots are idle.

If the channel monitoring result is that all the monitoring slots in the time T_{d} are idle, step 4 is performed. Otherwise, step 5 is performed.

If the channel access procedure ends, the network device may perform transmission by using the channel. In addition, a maximum time length that may be used by the network device to perform transmission by using the channel cannot exceed T_{mcot, *p*}.

Before the network device starts step 1 of the type 1 channel access mode, the network device needs to maintain and adjust a size of a contention window CW*ₚ*. In an initial case, the size of the contention window CW*ₚ* is set to a minimum value CW_{min, *p*}. In a transmission process, the size of the contention window CW*ₚ* may be adjusted within an allowed value range of CW*ₚ* based on acknowledgement (acknowledgement, ACK) or negative acknowledgement (negative acknowledgement, NACK) information that is fed back by a terminal and received by the network device. If the contention window CW*ₚ* has been added to the maximum value CW_{max, *p*}, and the maximum contention window CW_{max, *p*} is kept for a specific number of times, the size of the contention window CW*ₚ* may be reset to the minimum value CW_{min, *p*}.

It should be noted that, after the communications device successfully performs the LBT of the type 1, channel occupancy time COT may be initiated on an unlicensed spectrum carrier, and the communications device may perform transmission in the COT or share the COT with another communications device. If the communications device does not immediately access the channel to perform data transmission, if the communications device needs to perform transmission subsequently, the communications device does not need to perform the LBT of the type 1 again, and only needs to perform LBT of relatively short duration once. For example, the communications device may perform only LBT whose duration is Tₛₗ+T_{d}. If the channel in the monitoring duration is always idle, the communications device may access the channel for transmission. If the channel is busy, the communications device needs to perform the LBT of type 1 again to initiate the COT.

### Type 2 channel access

Type 2 channel access may include type 2A (type2A), type 2B (type2B), and type 2C (type2C) channel access.

When a communications device performs transmission in COT, the communications device may access a channel in an LBT mode of the type 2A, 2B, or 2C.

In the type 2A channel access, the communications device may perform channel listening of 25 µs before transmission starts, and perform transmission after the channel listening succeeds. In the type 2B channel access, the communications device may perform channel listening of 16 µs before transmission starts, and perform transmission after the channel listening succeeds. A gap between a start location of the transmission and an end location of a previous transmission is 16 µs. In the type 2C channel access, the communications device may directly perform transmission. A size of a gap between a start location of the transmission and an end location of a previous transmission is not greater than 16 µs, and a length of the transmission does not exceed 584 µs.

In an SL-U system, in the absence of available COT, a communications device may access a channel to transmit a synchronization signal/PBCH block (synchronizing signal/PBCH block, SS/PBCH block) in the type 2A mode when the following conditions are met: transmitting duration does not exceed 1 ms; and a duty cycle for transmitting an S-SSB does not exceed 1/20.

### SCSt

On unlicensed spectrum, a short control signalling transmission mode is introduced to improve a probability of success of accessing a channel during transmission of control signalling. When the short signalling transmission mode is used, a device can access a channel for transmission without a need to perform sensing (sensing) on the channel, but a condition 1 and a condition 2 need to be met. Condition 1: During an observation period of 50 ms, a quantity short control signalling transmissions is less than or equal to 50. Condition 2: During the observation period of the 50 ms, duration occupied by the short control signalling transmission does not exceed 2.5 ms.

### Reduced capability (reduced capability, RedCap) terminal device

Some scenarios (such as smart homes and smart factories) require a terminal device to reduce complexity, costs, sizes, and energy consumption. To meet the foregoing requirements, a reduced capability terminal device (RedCap for short) is introduced into some communications systems.

In some embodiments, compared with a common terminal device, a reduced capability terminal device can reduce requirements of at least one of the following nine terminal capabilities, thereby reducing complexity and costs.
(1) Reduce a maximum bandwidth of the terminal device.
   For example, in an FR1 frequency band, a maximum bandwidth of the reduced capability device is reduced from 100 MHz to 20 MHz. In addition, in an FR2 frequency band, a maximum bandwidth of the reduced capability device is reduced to 100 MHz.
(2) Reduce a quantity of receive (Rx) antennas of the terminal device.

For example, in a frequency band in which a common NR terminal device is required to support at least two receive antenna ports, a minimum quantity of receive antennas supported by the reduced capability device is 1. In these frequency bands, a quantity of receive antennas of the reduced capability device may alternatively be 2.

For example, in a frequency band in which a common NR UE is required to support at least four receive antenna ports, a minimum quantity of receive antennas supported by the reduced capability device is 1. In these frequency bands, a quantity of receive antennas of the reduced capability device may alternatively be 2.

(3) Reduce a quantity of multiple input multiple output (multiple input multiple output, MIMO) layers of the terminal device.

For example, for a reduced capability device whose quantity of receive antennas is 1, one layer of downlink (downlink, DL) MIMO may be supported. For a reduced capability device whose quantity of receive antennas is 2, two layers of DL MIMO may be supported.

(4) Reduce a maximum modulation order.

For example, for uplink (uplink, UL), in the FR1 frequency band, the maximum modulation order is reduced from 64 QAM to 16 QAM; in the FR2 frequency band, the maximum modulation order is reduced from 64 QAM to 16 QAM.

For example, for DL, in the FR1 frequency band, the maximum modulation order is reduced from 256 QAM to 64 QAM; in the FR2 frequency band, the maximum modulation order is reduced from 64 QAM to 16 QAM.

(5) Use half-duplex frequency division duplex (half duplex frequency division duplex, HD-FDD).

(6) Loosen processing time of the terminal device.

(7) Reduce a maximum quantity of data resource bearer (data resource bearer, DRB) that is forcibly supported by a terminal.

(8) Reduce a buffer size of layer 2.

(9) Reduce a length of a packet data convergence protocol (packet data convergence protocol, PDCP)/RLC sequence number (sequence number, SN).

As described above, in the absence of the available COT, the communications device needs to perform type 1 channel access to communicate on the unlicensed spectrum. However, a type 1 channel access procedure requires that the communications device monitor a channel for relatively long time. During channel monitoring, the communications device cannot enter a sleep state (for example, a deep sleep state), and consequently, power consumption of the communications device is relatively large.

In view of the foregoing problem, this application proposes the technical solutions illustrated in FIG. 10 and FIG. 11, which are described below.

Both the methods shown in FIG. 10 and FIG. 11 may be performed by a communications device. The communications device may include the terminal device and/or the network device described above.

For example, the communications device may include a reduced capability terminal device. The reduced capability terminal device may meet the foregoing requirements for the reduced capability terminal device. For example, the reduced capability terminal device may meet one or more of the following: supporting one receive antenna; a maximum transmission bandwidth being less than or equal to a fifth threshold; a maximum modulation order being less than or equal to a sixth threshold; or belonging to a first device type defined in a standard. The fifth threshold may be 20 MHz; the sixth threshold may be 64 QAM; and the first device type may be a reduced capability terminal type defined in a standard.

FIG. 10 is a schematic flowchart of a wireless communication method according to an embodiment of this application. The method illustrated in FIG. 10 may include step S1010.

Step S1010: When a first channel meets a first condition, a communications device may transmit the first channel in an SCSt mode.

It should be noted that the first channel may include a sidelink channel. For example, the sidelink channel may include a channel that carries data or carries no data. For example, the sidelink channel may include a PSSCH that carries an SL-SCH, and/or a PSSCH that carries no SL-SCH. For another example, the sidelink channel may include a PSFCH.

It can be learned from this that, based on this application, even if the communications device has no available COT, in a case that the first condition is met, the communications device may transmit the first channel in the SCSt mode. Because in the SCSt mode, there are few quantities of transmissions and transmission time is relatively short, transmitting the first channel in the SCSt mode may reduce energy consumption of transmitting LBT of the type 1 on the first channel.

In particular, compared with a conventional terminal device, a reduced capability terminal device is more sensitive to power consumption, and is required to transmit less amount of data. Therefore, transmitting the first channel in the SCSt mode is feasible for the reduced capability terminal device. In addition, based on the foregoing analysis, energy consumption may be reduced by transmitting the first channel in the SCSt mode. Therefore, the technical solution provided in this application can better meet a power consumption requirement of the reduced capability terminal device.

In a case that the first channel is transmitted in the SCSt mode, the communications device may execute channel access. A type of the channel access may be type 2. For example, the communications device may execute type 2A channel access. It may be understood that duration for the type 2A channel access is far less than duration for type 1 channel access. Therefore, based on this application, channel access duration can be shortened while meeting a requirement for unlicensed spectrum.

In some embodiments, the first condition may be related to transmission duration of continuously transmitting the first channel or more channels, and/or a duty cycle of the first channel. The first channel may belong to the one or more channels that are continuously transmitted. In other words, in this application, the terminal device may be allowed to transmit the first channel by using SCSt when transmitting duration and a duty ratio limit are met, thereby reducing an energy loss of type 1 channel access performed by the terminal device.

For example, the first condition may include one or more of the following: the terminal device being a reduced capability terminal; transmission duration of one or more channels that are continuously transmitted being less than or equal to a first threshold; or a duty cycle of the first channel being less than or equal to a second threshold. The first threshold may be, for example, 1 ms. The second threshold may be, for example, 1/20.

In some embodiments, the first condition may be related to one or more of the following information: a type of the first channel; a priority corresponding to the first channel; an initial value of a channel access counter corresponding to the first channel, or information carried in the first channel, which are described below.

The type of the first channel may be used to indicate one or more of the following information of the first channel: a channel type, a channel function, whether data is carried in a channel, or the like. For example, the channel type may include: a PSSCH or a PSFCH. For another example, whether data is carried may include a channel that carries an SL-SCH and a channel that carries no SL-SCH.

In a possible implementation, the first condition may include: the type of the first channel including one or more of the following: a PSSCH, or a PSFCH. In other words, when the first device transmits the first channel in the SCSt mode, at least the following is met: the first channel including the PSSCH and/or the PSFCH.

For example, the first condition may include one or more of the following: transmission duration of one or more channels that are continuously transmitted does not exceed 1 ms; a duty cycle for transmitting the first channel does not exceed 1/20; or the first channel includes one or more of a PSSCH of the SL-SCH, a PSSCH that carries no SL-SCH, or a PSFCH.

The priority corresponding to the first channel may be used to indicate a channel access priority class of the first channel. For example, the priority corresponding to the first channel may be represented by a CAPC.

It should be noted that a higher priority corresponding to the first channel may indicate a lower value corresponding to the priority. Alternatively, a higher priority corresponding to the first channel may indicate a higher value corresponding to the priority. For ease of description, in the following embodiments, the higher priority corresponding to the first channel indicating the lower value corresponding to the priority is used as examples for description. It may be understood that, a case in which the higher priority corresponding to the first channel indicates the higher value corresponding to the priority may be applicable to the following embodiments when the following embodiments are simply adjusted. Details are not described in this application.

In a possible implementation, the first condition may include: a value of the priority corresponding to the first channel being greater than or equal to a third threshold. In other words, in this embodiment, when the first device transmits the first channel in the SCSt mode, at least the following needs to be met: the value of the priority corresponding to the first channel is greater, or the priority corresponding to the first channel is lower.

For example, the first condition may include one or more of the following: transmission duration of one or more channels that are continuously transmitted does not exceed 1 ms; a duty cycle for transmitting the first channel does not exceed 1/20; the first channel includes one or more of a PSSCH of the SL-SCH, a PSSCH that carries no SL-SCH, or a PSFCH; or the value of the priority corresponding to the first channel is greater than or equal to the third threshold.

It may be understood that, in a case that the value of the priority corresponding to the first channel is relatively large (that is, the priority is relatively low), if the communications device uses the type 1 channel access mode, channel access duration corresponding to the value of the priority is relatively long. The priority being represented by CPAC is used as an example. When a value of CAPC is relatively large, the communications device may determine *Nᵢₙᵢₜ* by using a relatively large value *CWₚ*, thus channel access duration is relatively long. In this case, based on this application, the first channel may be transmitted in the SCSt mode, so as to avoid unnecessary energy consumption caused by the relatively long channel access duration.

It should be noted that a value of the third threshold is not limited in this application. For example, the third threshold may be a positive integer. For example, the third threshold may be 3 or 4.

It should be noted that the third threshold may meet one or more of the following: being configured by a network device, being pre-configured, or being defined by a standard.

In a possible implementation, the first condition may include: the initial value of the channel access counter corresponding to the first channel being greater than or equal to a fourth threshold. In other words, in this embodiment, when the first device transmits the first channel in the SCSt mode, at least the following is met: the initial value of the channel access counter corresponding to the first channel being greater than or equal to the fourth threshold.

For example, the first condition may include one or more of the following: transmission duration of one or more channels that are continuously transmitted does not exceed 1 ms; a duty cycle for transmitting the first channel does not exceed 1/20; the first channel includes one or more of a PSSCH of the SL-SCH, a PSSCH that carries no SL-SCH, or a PSFCH; or the initial value of the channel access counter corresponding to the first channel is greater than or equal to the fourth threshold.

The following describes the channel access counter. In a channel access procedure, the communications device may reduce a value of the channel access counter. When the value of the channel access counter is reduced to 0, the communications device may end the channel access procedure. It can be learned from this that a larger initial value of the channel access counter indicates longer duration of the channel access procedure. The value of the channel access counter may be represented by N described above, and the initial value of the channel access counter may be represented by Nᵢₙᵢₜ described above.

As described above, the greater initial value of the channel access counter indicates the longer duration of the type 1 channel access procedure. In this case, based on this application, the first channel may be transmitted in the SCSt mode, so as to avoid unnecessary energy consumption caused by the relatively long channel access duration.

It should be noted that a value of the fourth threshold is not limited in this application. For example, the fourth threshold may be a positive integer.

It should be noted that the fourth threshold may meet one or more of the following: being configured by a network device, being pre-configured, or being defined by a standard.

In some embodiments, the first condition may include: the information carried in the first channel including specific information. In other words, in this embodiment, when the first device transmits the first channel in the SCSt mode, at least the following needs to be met: the information carried in the first channel including the specific information.

In a case that the first channel carries the specific information, the first channel may be transmitted in the SCSt mode, so that a case of excessive channel occupation caused when any information carried in the first channel occupies the channel may be avoided.

For example, the first condition may include one or more of the following: transmission duration of one or more channels that are continuously transmitted does not exceed 1 ms; a duty cycle for transmitting the first channel does not exceed 1/20; the first channel includes one or more of a PSSCH of the SL-SCH, a PSSCH that carries no SL-SCH, or a PSFCH; or the information carried in the first channel including only the specific information.

For another example, the first condition may include one or more of the following: transmission duration of one or more channels that are continuously transmitted does not exceed 1 ms; a duty cycle for transmitting the first channel does not exceed 1/20; the first channel includes one or more of a PSSCH of the SL-SCH, a PSSCH that carries no SL-SCH, or a PSFCH; the information carried in the first channel including the specific information; or the initial value of the channel access counter corresponding to the first channel is greater than or equal to the fourth threshold.

The specific information may meet one or more of the following: being configured by a network device, being pre-configured, or being defined by a standard.

Optionally, the specific information may include one or more of the following information: COT request information, a MAC CE, or a MAC header.

The COT request information may be used to trigger another communications device to share an available COT with the communications device. Therefore, based on the COT request information, the communications device may acquire a shared COT, so that type 1 channel access can be avoided.

For example, the first condition may include one or more of the following: transmission duration of one or more channels that are continuously transmitted does not exceed 1 ms; a duty cycle for transmitting the first channel does not exceed 1/20; the first channel includes one or more of a PSSCH of the SL-SCH, a PSSCH that carries no SL-SCH, or a PSFCH; or the information carried in the first channel includes the COT request information.

FIG. 11 is a schematic flowchart of a wireless communication method according to an embodiment of this application. The method illustrated in FIG. 11 may include step S1110.

Step S1110: A communications device executes a channel access procedure.

For example, a parameter for the channel access procedure may include one or more of the parameters shown in Table 2. Optionally, the parameter for the channel access procedure may include a parameter related to channel access duration. The parameter related to the channel access duration may include one or more of the following: an initial value of a channel access counter or a contention window size.

In an example in which the parameter for the channel access procedure includes the contention window size (represented by *CWₚ*), a value of *CWₚ* used when a reduced capability terminal device performs type 1 channel access may be limited, so that too much energy consumption caused when a relatively large initial value (represented by *Nᵢₙᵢₜ*) of the channel access counter selected by the reduced capability terminal device to perform the type 1 channel access may be avoided.

In step S1110, the parameter for the channel access procedure is related to a capability of the communications device. For example, in a case that the communications device is a non-reduced capability terminal device, the parameter for the channel access procedure may be set according to a related technology. For another example, in a case that the communications device is a reduced capability terminal device, the parameter for the channel access procedure may be set according to a first rule. Based on the first rule, duration of the channel access procedure performed by the communications device may be shorter than that of the channel access procedure performed by the non-reduced capability terminal device.

It may be learned from this that in this application, parameter selection for the channel access procedure considers the capability of the communications device. Therefore, duration of the channel access procedure may be controlled according to the capability of the communications device, so as to avoid a problem that duration of a channel access procedure for a communications device that requires relatively high energy consumption is long.

A type of the channel access procedure in step S1110 may be type 1. Although the type 1 channel access may be used in this application, because the parameter for the channel access is affected by the capability of the communications device, duration of channel access may be less than duration of type 1 channel access in a related technology. Therefore, the method illustrated in FIG. 11 may still reduce impact of channel access duration on power consumption to a some extent.

In some embodiments, the parameter for the channel access procedure may be a parameter corresponding to a first priority. Optionally, the first priority may be indicated by a CAPC. A value of the first priority may be less than or equal to a value of a priority corresponding to a to-be-transmitted signal.

For example, the value of the first priority may be represented by *x*, and the priority of the to-be-transmitted signal may be represented by *p*. In some embodiments, *x* may be a fixed value regardless of a value of *p*. The fixed value may be a smaller value in a value range of *p*. For example, *x* may be 1 or 2. In some embodiments, *x* may vary with *p*, but *x* is always less than or equal to *p*.

In a related technology, the parameter for the channel access procedure is determined based on the priority corresponding to the to-be-transmitted signal. In this application, the channel access parameter is determined based on the first priority. The value of the first priority may be less than or equal to the value of the priority corresponding to the to-be-transmitted signal. Therefore, in a case that the communications device is a reduced capability terminal device, the priority may be increased, so that duration of the channel access procedure is shorter.

It should be noted that the first priority may meet one or more of the following: being configured by a network device, being pre-configured, or being defined by a standard.

In some embodiments, the parameter for the channel access procedure may be determined based on an interval of the priority corresponding to the to-be-transmitted signal. For example, in a case that a value of the priority corresponding to the to-be-transmitted signal belongs to a first interval, the parameter for the channel access procedure may be a parameter corresponding to the first priority. For another example, in a case that a value of the priority corresponding to the to-be-transmitted signal belongs to a second interval, the parameter for the channel access procedure may be a parameter corresponding to a second priority. The first interval or the second interval may be a value range, or may be a specific value.

For example, when *p* ≤ 3, *x* may be 1. For another example, when *p* = 4, corresponding *x* to 2.

It should be noted that the second priority may meet one or more of the following: being configured by a network device, being pre-configured, or being defined by a standard.

In some embodiments, the first rule may include that the parameter for the channel access procedure may be determined based on minimum duration capable of being configured in the channel access procedure.

For example, for *CWₚ*, in a case that the terminal device is a reduced capability terminal device, *CWₚ* may be set to *CW_{min,p}*. For example, if a value of a channel access priority class of the to-be-transmitted signal of the communications device is *p*, the communications device may set a counter *N* = *Nᵢₙᵢₜ* when initiating LBT of type 1, where *Nᵢₙᵢₜ* may be a random number evenly distributed between 0 and *CWₚ*, *CWₚ* is always *CW_{min,x}* defined in Table 2, and *x* may represent a value of the first priority.

In some embodiments, after the communications device accesses the channel, maximum duration for generating COT may be determined based on the first priority. For example, after the communications device successfully performs type 1 channel access, maximum duration of the generated COT may be *T_{mcot,x}* defined in Table 2. In a case that the value of the first priority is less than the value of the priority corresponding to the to-be-transmitted signal, the maximum duration of generating the COT is less than maximum duration of the COT determined by using the priority corresponding to the to-be-transmitted signal, so that excessive occupation of the channel by the communications device may be avoided.

In some embodiments, the first rule may include the parameter for the channel access procedure being unchanged. For example, when the communications device initiates LBT of type 1, the communications device may always determine a value of *Nᵢₙᵢₜ* based on *CW_{min,p}*, so as to avoid generating an excessive counter value, thereby avoiding excessive duration of the channel access procedure consumption.

For example, the parameter for the channel access procedure may not be updated based on HARQ-ACK feedback. For example, if the priority *p* corresponding to the to-be-transmitted signal is greater than or equal to a specific value (for example, 3 or 4), because an allowed value *CWₚ* has a relatively large value, the reduced capability terminal device may always set *CWₚ* to *CW_{min,p}*, that is, *CWₚ* is not updated based on the HARQ-ACK.

For another example, when the to-be-transmitted signal corresponds to the priority *p*, for PSCCH/PSSCH transmission whose HARQ-ACK feedback is not activated, regardless of whether a PSFCH resource is configured in a resource pool, the reduced capability terminal device may set *CWₚ* to *CW_{min,p}*, and not update *CWₚ* to a larger allowed value.

The foregoing describes the method embodiments of this application in detail. The following describes apparatus embodiments of this application in detail. It should be understood that the descriptions of the method embodiments correspond to descriptions of the apparatus embodiments, and therefore, for parts that are not described in detail, reference may be made to the foregoing method embodiments.

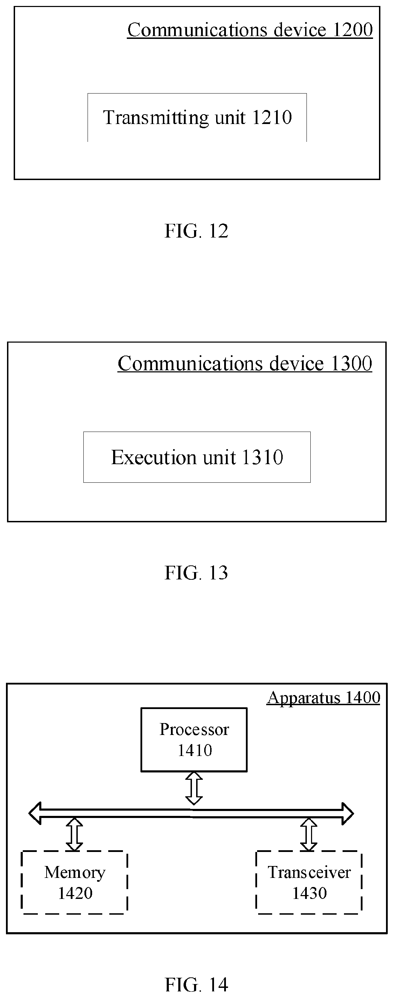

FIG. 12 is a schematic diagram of a structure of a communications device 1200 according to an embodiment of this application. The communications device 1200 may include a transmitting unit 1210.

The transmitting unit 1210 is configured to transmit a first channel in an SCSt mode when the first channel meets a first condition. The first condition is related to one or more of the following information: a type of the first channel; a priority corresponding to the first channel; an initial value of a channel access counter corresponding to the first channel, or information carried in the first channel.

In some embodiments, the first condition includes one or more of the following: the type of the first channel including one or more of the following: a PSSCH, or a PSFCH; a value of the priority corresponding to the first channel being greater than or equal to a third threshold; or the initial value of the channel access counter corresponding to the first channel being greater than or equal to a fourth threshold.

In some embodiments, the third threshold or the fourth threshold meets one or more of the following: being configured by a network device, being pre-configured, or being defined by a standard.

In some embodiments, the first condition includes: the information carried in the first channel including specific information, and the specific information includes one or more of the following information: COT request information, a MAC CE, or a MAC header.

In some embodiments, the specific information meets one or more of the following: being configured by a network device, being pre-configured, or being defined by a standard.

In some embodiments, the device 1200 is further configured to execute a channel access procedure. A type of the channel access procedure is type 2.

In some embodiments, the communications device 1200 is a reduced capability terminal device.

In some embodiments, the reduced capability terminal device meets one or more of the following: supporting one receive antenna; a maximum transmission bandwidth being less than or equal to a fifth threshold; a maximum modulation order being less than or equal to a sixth threshold; or belonging to a first device type defined in a standard.

In some embodiments, the fifth threshold is 20 MHz.

In some embodiments, the sixth threshold is 64 QAM.

In some embodiments, the first channel is a sidelink channel.

In an optional embodiment, the transmitting unit 1210 may be a transceiver 1430. The communications device 1200 may further include a processor 1410 and a memory 1420, which are specifically shown in FIG. 14.

FIG. 13 is a schematic diagram of a structure of a communications device 1300 according to an embodiment of this application. The communications device 1300 includes an execution unit 1310.

The execution unit 1310 is configured to execute a channel access procedure. A parameter for the channel access procedure is related to a capability of the communications device.

In some embodiments, in a case that the communications device is a reduced capability terminal device, the parameter for the channel access procedure is set according to a first rule.

In some embodiments, the first rule includes: the parameter for the channel access procedure being a parameter corresponding to a first priority.

In some embodiments, a value of the first priority is less than a value of a priority corresponding to the to-be-transmitted signal of the communications device.

In some embodiments, the first priority meets one or more of the following: being configured by a network device, being pre-configured, or being defined by a standard.

In some embodiments, the parameter for the channel access procedure being the parameter corresponding to the first priority includes: in a case that a value of a priority corresponding to a to-be-transmitted signal of the terminal device belongs to a first interval, the parameter for the channel access procedure is the parameter corresponding to the first priority.

In some embodiments, the first priority is indicated by a CAPC.

In some embodiments, the first rule includes: the parameter for the channel access procedure being determined based on minimum duration capable of being configured in the channel access procedure.

In some embodiments, the first rule includes the parameter for the channel access procedure being unchanged.

In some embodiments, the reduced capability terminal device meets one or more of the following: supporting one receive antenna; a maximum transmission bandwidth being less than or equal to a fifth threshold; a maximum modulation order being less than or equal to a sixth threshold; or belonging to a first device type defined in a standard.

In some embodiments, the fifth threshold is 20 MHz.

In some embodiments, the sixth threshold is 64 QAM.

In some embodiments, a type of the channel access procedure is type 1.

In some embodiments, the parameter for the channel access procedure includes one or more of the following: an initial value of a channel access counter or a contention window size.

In an optional embodiment, the execution unit 1310 may be a processor 1410. The communications device 1300 may further include a transceiver 1430 and a memory 1420, as specifically shown in FIG. 14.

FIG. 14 is a schematic structural diagram of an apparatus for communication according to an embodiment of this application. Dashed lines in FIG. 14 indicate that a unit or module is optional. The apparatus 1400 may be configured to implement the methods described in the foregoing method embodiments. The apparatus 1400 may be a chip or a communications device (such as a terminal device or a network device).

The apparatus 1400 may include one or more processors 1410. The processor 1410 may support the apparatus 1400 in implementing the methods described in the foregoing method embodiments. The processor 1410 may be a general-purpose processor or a dedicated processor. For example, the processor may be a central processing unit (central processing unit, CPU). Alternatively, the processor may be another general-purpose processor, a digital signal processor (digital signal processor, DSP), an application-specific integrated circuit (application specific integrated circuit, ASIC), a field-programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

The apparatus 1400 may further include one or more memories 1420. The memory 1420 stores a program, where the program may be executed by the processor 1410, to cause the processor 1410 to execute the methods described in the method embodiments. The memory 1420 may be separated from or integrated into the processor 1410.

The apparatus 1400 may further include a transceiver 1430. The processor 1410 may communicate with another device or chip by using the transceiver 1430. For example, the processor 1410 may transmit data to and receive data from another device or chip through the transceiver 1430.

An embodiment of this application further provides a computer-readable storage medium for storing a program. The computer-readable storage medium may be applied to the communications device provided in embodiments of this application, and the program causes a computer to perform the methods performed by the communications device in various embodiments of this application.

An embodiment of this application further provides a computer program product. The computer program product includes a program. The computer program product may be applied to the communications device provided in embodiments of this application, and the program causes a computer to perform the methods performed by the communications device in various embodiments of this application.

An embodiment of this application further provides a computer program. The computer program may be applied to the communications device provided in embodiments of this application, and the computer program causes a computer to execute the methods executed by the communications device in embodiments of this application.

It should be understood that the terms "system" and "network" in this application may be used interchangeably. In addition, the terms used in this application are used only to illustrate specific embodiments of this application, but are not intended to limit this application. The terms "first", "second", "third", "fourth", and the like in the specification, claims, and drawings of this application are used to distinguish between different objects, rather than to describe a specific order. In addition, the terms "include" and "have" and any variations thereof are intended to cover a non-exclusive inclusion.

In embodiments of this application, "indication" mentioned herein may refer to a direct indication, or may refer to an indirect indication, or may mean that there is an association relationship. For example, if A indicates B, it may mean that A directly indicates B, for example, B may be obtained from A. Alternatively, it may mean that A indicates B indirectly, for example, A indicates C, and B may be obtained from C. Alternatively, it may mean that there is an association relationship between A and B.

In embodiments of this application, "B corresponding to A" means that B is associated with A, and B may be determined based on A. However, it should be further understood that, determining B based on A does not mean determining B based only on A, but instead, B may be determined based on A and/or other information.

In embodiments of this application, the term "correspond" may mean that there is a direct or indirect correspondence between the two, or may mean that there is an association relationship between the two, or may mean that there is a relationship such as indicating and being indicated, or configuring and being configured.

In embodiments of this application, "predefined" or "pre-configured" may be implemented by pre-storing corresponding code, tables, or other forms that may be used to indicate related information in devices (for example, including a terminal device and a network device), and a specific implementation thereof is not limited in this application. For example, being predefined may refer to being defined in a protocol.

In embodiments of this application, the "protocol" may indicate a standard protocol in the communications field, which may include, for example, an LTE protocol, an NR protocol, and a related protocol applied to a future communications system. This is not limited in this application.

In embodiments of this application, the term "and/or" describes merely an association relationship between associated objects, and represents that there may be three relationships. For example, A and/or B may represent three cases: only A exists, both A and B exist, and only B exists. In addition, the character "/" in this specification generally indicates an "or" relationship between the associated objects.

In embodiments of this application, the "include" may refer to direct inclusion, or may refer to indirect inclusion. Optionally, the term "include" mentioned in embodiments of this application may be replaced with "indicate" or "be used to determine". For example, A including B may be replaced with that A indicates B, or A is used to determine B.

In embodiments of this application, sequence numbers of the foregoing processes do not mean execution orders. The execution orders of the processes should be determined based on functions and internal logic of the processes, and should not be construed as any limitation on the implementation processes of embodiments of this application.

In several embodiments provided in this application, it should be understood that the disclosed system, apparatus, and method may be implemented in another manner. For example, the described apparatus embodiments are merely examples. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented as indirect couplings or communication connections through some interfaces, apparatus or units, and may be implemented in electronic, mechanical, or other forms.

The units described as separate parts may or may not be physically separate, and parts displayed as units may or may not be physical units, and may be located in one position, or may be distributed on a plurality of network units. Some or all of the units may be selected according to actual needs to achieve the objective of the solutions of embodiments.

In addition, functional units in embodiments of this application may be integrated into one processing unit, or each of the units may exist alone physically, or two or more units may be integrated into one unit.

All or some of the foregoing embodiments may be implemented by using software, hardware, firmware, or any combination thereof. When software is used to implement embodiments, the foregoing embodiments may be implemented completely or partially in a form of a computer program product. The computer program product includes one or more computer instructions. When the computer program instructions are loaded and executed on a computer, the procedures or functions according to embodiments of this application are completely or partially generated. The computer may be a general-purpose computer, a dedicated computer, a computer network, or another programmable apparatus. The computer instructions may be stored in a computer-readable storage medium or transmitted from one computer-readable storage medium to another computer-readable storage medium. For example, the computer instructions may be transmitted from a website, computer, server, or data center to another website, computer, server, or data center in a wired (for example, a coaxial cable, an optical fiber, and a digital subscriber line (digital subscriber line, DSL)) manner or a wireless (for example, infrared, wireless, and microwave) manner. The computer-readable storage medium may be any usable medium readable by the computer, or a data storage device, such as a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, a solid-state drive (solid state disk, SSD)), or the like.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A wireless communication method, comprising:
when a first channel meets a first condition, transmitting, by a communications device, the first channel in a short control signalling transmission SCSt mode,
wherein the first condition is related to one or more of following information:
a type of the first channel;
a priority corresponding to the first channel;
an initial value of a channel access counter corresponding to the first channel; or
information carried in the first channel.

2. The method according to claim 1, wherein the first condition comprises one or more of following:
the type of the first channel comprising one or more of following: a physical sidelink shared channel PSSCH or a physical sidelink feedback channel PSFCH;
a value of the priority corresponding to the first channel being greater than or equal to a third threshold; or
the initial value of the channel access counter corresponding to the first channel being greater than or equal to a fourth threshold.

3. The method according to claim 2, wherein the third threshold or the fourth threshold meets one or more of following: being configured by a network device, being pre-configured, or being defined by a standard.

4. The method according to any one of claims 1 to 3, wherein the first condition comprises: the information carried in the first channel comprising specific information, and the specific information comprises one or more of following information: channel occupancy time COT request information, a medium access control control element MAC CE, or a MAC header.

5. The method according to claim 4, wherein the specific information meets one or more of following: being configured by a network device, being pre-configured, or being defined by a standard.

6. The method according to any one of claims 1 to 5, further comprising:
executing, by the communications device, a channel access procedure,
wherein a type of the channel access procedure is type 2.

7. The method according to any one of claims 1 to 6, wherein the communications device is a reduced capability terminal device.

8. The method according to claim 7, wherein the reduced capability terminal device meets one or more of following:
supporting one receive antenna;
a maximum transmission bandwidth being less than or equal to a fifth threshold;
a maximum modulation order being less than or equal to a sixth threshold; or
belonging to a first device type defined in a standard.

9. The method according to claim 8, wherein the fifth threshold is 20 MHz.

10. The method according to claim 8 or 9, wherein the sixth threshold is 64 QAM.

11. The method according to any one of claims 1 to 10, wherein the first channel is a sidelink channel.

12. A wireless communication method, comprising:
executing, by a communications device, a channel access procedure,
wherein a parameter for the channel access procedure is related to a capability of the communications device.

13. The method according to claim 12, wherein in a case that the communications device is a reduced capability terminal device, the parameter for the channel access procedure is set according to a first rule.

14. The method according to claim 13, wherein the first rule comprises: the parameter for the channel access procedure being a parameter corresponding to a first priority.

15. The method according to claim 14, wherein a value of the first priority is less than a value of a priority corresponding to a to-be-transmitted signal of the communications device.

16. The method according to claim 14 or 15, wherein the first priority meets one or more of following: being configured by a network device, being pre-configured, or being defined by a standard.

17. The method according to any one of claims 14 to 16, wherein the parameter for the channel access procedure being the parameter corresponding to the first priority comprises that:
in a case that a value of a priority corresponding to a to-be-transmitted signal of the terminal device belongs to a first interval, the parameter for the channel access procedure is the parameter corresponding to the first priority.

18. The method according to any one of claims 14 to 17, wherein the first priority is indicated by using a channel access priority class CAPC.

19. The method according to any one of claims 13 to 18, wherein the first rule comprises: the parameter for the channel access procedure being determined based on minimum duration capable of being configured for the channel access procedure.

20. The method according to any one of claims 13 to 19, wherein the first rule comprises: the parameter for the channel access procedure being unchanged.

21. The method according to any one of claims 13 to 20, wherein the reduced capability terminal device meets one or more of following:
supporting one receive antenna;
a maximum transmission bandwidth being less than or equal to a fifth threshold;
a maximum modulation order being less than or equal to a sixth threshold; or
belonging to a first device type defined in a standard.

22. The method according to claim 21, wherein the fifth threshold is 20 MHz.

23. The method according to claim 21 or 22, wherein the sixth threshold is 64 QAM.

24. The method according to any one of claims 12 to 23, wherein a type of the channel access procedure is type 1.

25. The method according to any one of claims 12 to 24, wherein the parameter for the channel access procedure comprises one or more of following: an initial value of a channel access counter or a contention window size.

26. A communications device, comprising:
a transmitting unit, configured to: when a first channel meets a first condition, transmit the first channel in a short control signalling transmission SCSt mode,
wherein the first condition is related to one or more of following information:
a type of the first channel;
a priority corresponding to the first channel;
an initial value of a channel access counter corresponding to the first channel; or
information carried in the first channel.

27. The device according to claim 26, wherein the first condition comprises one or more of following:
the type of the first channel comprising one or more of following: a physical sidelink shared channel PSSCH or a physical sidelink feedback channel PSFCH;
a value of the priority corresponding to the first channel being greater than or equal to a third threshold; or
the initial value of the channel access counter corresponding to the first channel being greater than or equal to a fourth threshold.

28. The device according to claim 27, wherein the third threshold or the fourth threshold meets one or more of following: being configured by a network device, being pre-configured, or being defined by a standard.

29. The device according to any one of claims 26 to 28, wherein the first condition comprises: the information carried in the first channel comprising specific information, and the specific information comprises one or more of following information: channel occupation time COT request information, a medium access control control element MAC CE, or a MAC header.

30. The device according to claim 29, wherein the specific information meets one or more of following: being configured by a network device, being pre-configured, or being defined by a standard.

31. The device according to any one of claims 26 to 30, wherein the device is further configured to:
execute a channel access procedure,
wherein a type of the channel access procedure is type 2.

32. The device according to any one of claims 26 to 31, wherein the communications device is a reduced capability terminal device.

33. The device according to claim 32, wherein the reduced capability terminal device meets one or more of following:
supporting one receive antenna;
a maximum transmission bandwidth being less than or equal to a fifth threshold;
a maximum modulation order being less than or equal to a sixth threshold; or
belonging to a first device type defined in a standard.

34. The device according to claim 33, wherein the fifth threshold is 20 MHz.

35. The device according to claim 33 or 34, wherein the sixth threshold is 64 QAM.

36. The device according to any one of claims 26 to 35, wherein the first channel is a sidelink channel.

37. A communications device, comprising:
an execution unit, configured to execute a channel access procedure,
wherein a parameter for the channel access procedure is related to a capability of the communications device.

38. The device according to claim 37, wherein in a case that the communications device is a reduced capability terminal device, the parameter for the channel access procedure is set according to a first rule.

39. The device according to claim 38, wherein the first rule comprises: the parameter for the channel access procedure being a parameter corresponding to a first priority.

40. The device according to claim 39, wherein a value of the first priority is less than a value of a priority corresponding to a to-be-transmitted signal of the communications device.

41. The device according to claim 39 or 40, wherein the first priority meets one or more of following: being configured by a network device, being pre-configured, or being defined by a standard.

42. The device according to any one of claims 39 to 41, wherein the parameter for the channel access procedure being the parameter corresponding to the first priority comprises that:
in a case that a value of a priority corresponding to a to-be-transmitted signal of the terminal device belongs to a first interval, the parameter for the channel access procedure is the parameter corresponding to the first priority.

43. The device according to any one of claims 39 to 42, wherein the first priority is indicated by using a channel access priority class CAPC.

44. The device according to any one of claims 38 to 43, wherein the first rule comprises: the parameter for the channel access procedure being determined based on minimum duration capable of being configured for the channel access procedure.

45. The device according to any one of claims 38 to 44, wherein the first rule comprises: the parameter for the channel access procedure being unchanged.

46. The device according to any one of claims 38 to 45, wherein the reduced capability terminal device meets one or more of following:
supporting one receive antenna;
a maximum transmission bandwidth being less than or equal to a fifth threshold;
a maximum modulation order being less than or equal to a sixth threshold; or
belonging to a first device type defined in a standard.

47. The device according to claim 46, wherein the fifth threshold is 20 MHz.

48. The device according to claim 46 or 47, wherein the sixth threshold is 64 QAM.

49. The device according to any one of claims 37 to 48, wherein a type of the channel access procedure is type 1.

50. The device according to any one of claims 37 to 49, wherein the parameter for the channel access procedure comprises one or more of following: an initial value of a channel access counter or a contention window size.

51. A communications device, comprising a memory and a processor, wherein the memory is configured to store a program, and the processor is configured to invoke the program in the memory to cause the communications device to execute the method according to any one of claims 1 to 50.

52. An apparatus, comprising a processor configured to invoke a program from a memory, to cause the apparatus to execute the method according to any one of claims 1 to 50.

53. A chip, comprising a processor, configured to invoke a program from a memory to cause a device installed with the chip to execute the method according to any one of claims 1 to 50.

54. A computer-readable storage medium, wherein the computer-readable storage medium stores a program, and the program causes a computer to execute the method according to any one of claims 1 to 50.

55. A computer program product, comprising a program that causes a computer to execute the method according to any one of claims 1 to 50.

56. A computer program, wherein the computer program causes a computer to execute the method according to any one of claims 1 to 50.
